(19) **Europäisches Patentamt**
**European Patent Office**
**Office européen des brevets**

(11) **EP 4 287 108 A1**

(12) **EUROPEAN PATENT APPLICATION**
published in accordance with Art. 153(4) EPC

(43) Date of publication:
**06.12.2023 Bulletin 2023/49**

(21) Application number: **22745646.4**

(22) Date of filing: **18.01.2022**

(51) International Patent Classification (IPC):
***G06T 1/00*** *(2006.01)*      ***H04N 9/04*** *(2006.01)*

(52) Cooperative Patent Classification (CPC):
**G06T 1/00; H04N 23/10**

(86) International application number:
**PCT/JP2022/001512**

(87) International publication number:
**WO 2022/163423 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 JP 2021013992**

(71) Applicant: **Sony Semiconductor Solutions
Corporation
Atsugi-shi, Kanagawa 243-0014 (JP)**

(72) Inventors:
• **UEDA, Tomoki
Atsugi-shi, Kanagawa 243-0014 (JP)**
• **ITO, Masahiro
Atsugi-shi, Kanagawa 243-0014 (JP)**
• **SUZUKI, Masaru
Atsugi-shi, Kanagawa 243-0014 (JP)**
• **YAMASHITA, Hiroki
Atsugi-shi, Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(54) **IMAGE PROCESSING DEVICE, IMAGE PROCESSING METHOD, AND IMAGE PROCESSING
PROGRAM**

(57)      Detection of a spectral distribution of a light source is simplified. An image processing device according to the present disclosure includes a specific region detection unit, a chromaticity information detection unit, and a light source spectral information generation unit. The specific region detection unit detects a specific region that is a region of an image of a specific object from an image of a subject to which light from a light source is emitted. The chromaticity information detection unit detects light source color information on the basis of a plurality of image signals of the detected specific region. The light source spectral information generation unit generates light source spectral information, which is information of a spectrum of the light source, on the basis of the detected light source color information.

FIG.1

EP 4 287 108 A1

**Description**

Field

The present disclosure relates to an image processing device, an image processing method, and an image processing program.

Background

An image processing device that recognizes an object from an image captured by a camera or the like is used. For example, an image processing device that detects a region of a specific object such as a plant from an image captured by utilization of a multispectral image sensor that generates a plurality of images for each wavelength band is used. Such an image processing device identifies an object by using a fact that reflection of light on the object has a spectral distribution specific to the object. Such an image processing device can be used for a vegetation survey and the like.

In order to improve identification accuracy of an object, it is necessary to remove an influence of ambient light such as a light source. This is because light of the light source has a unique spectral distribution and reflected light that becomes a color of the object changes due to an influence of the light source. As a method of detecting a component of the light source from the reflected light from the object, a method of using a reflection model of the object has been proposed. This reflection model is called a dichroic reflection model, and is a model in which the reflected light from the object is assumed to include a specular reflection component and a diffuse reflection component. The specular reflection component is a component that reflects hue of the light source as it is, and the diffuse reflection component is a component in which the light from the light source is changed depending on original hue of the object and reflected.

An illumination estimation device that detects a region of this specular reflection from an image, estimates, as a distribution feature, a feature of how an image signal of the region spreads in a spectral space, and detects an illumination model on the basis of the distribution feature has been proposed (see, for example, Patent Literature 1). The illumination estimation device can output a spectral characteristic of illumination based on the detected illumination model.

Citation List

Patent Literature

Patent Literature 1: WO 2014/203453 A

Summary

Technical Problem

However, the above-described conventional technology has a problem that a method of detecting a spectral characteristic of a light source (illumination) becomes complicated. As described above, when the spectral characteristic is detected, it is necessary to calculate the distribution feature. This has a problem that a principal component analysis and matrix calculation are required for multidimensional spectral information and the method of detecting the spectral characteristic becomes complicated.

Thus, the present disclosure proposes an image processing device, an image processing method, and an image processing program that easily detect a spectral distribution of a light source. Solution to Problem

An image processing device according to the present disclosure includes: a specific region detection unit that detects a specific region that is a region of an image of a specific object from an image of a subject to which light from a light source is emitted; a chromaticity information detection unit that detects light source color information on a basis of a plurality of image signals of the detected specific region; and a light source spectral information generation unit that generates light source spectral information, which is information of a spectrum of the light source, on a basis of the detected light source color information.

Brief Description of Drawings

   FIG. 1 is a view illustrating a configuration example of an image processing device according to an embodiment of the present disclosure.

FIG. 2 is a view for describing a specular reflection component and a diffuse reflection component.

FIG. 3 is a view illustrating an example of a specific region in the present disclosure.

FIG. 4 is a view illustrating an example of spectral sensitivity characteristics of an imaging element used to detect a specific region in the present disclosure.

FIG. 5 is a view illustrating an example of detection of light source chromaticity information according to a first embodiment of the present disclosure.

FIG. 6 is a view illustrating an example of light source spectral information according to the first embodiment of the present disclosure.

FIG. 7A is a view illustrating an example of a removal of an influence of a light source according to the first embodiment of the present disclosure.

FIG. 7B is a view illustrating the example of the removal of the influence of the light source according to the first embodiment of the present disclosure.

FIG. 7C is a view illustrating the example of the removal of the influence of the light source according to the first embodiment of the present disclosure.

FIG. 8 is a view illustrating an example of image processing according to the first embodiment of the present disclosure.

FIG. 9 is a view illustrating an example of specific region detection processing according to the first embodiment of the present disclosure.

FIG. 10 is a view illustrating an example of light source color information detection processing according to the first embodiment of the present disclosure.

FIG. 11 is a view illustrating an example of light source spectral information generation processing according to the first embodiment of the present disclosure.

FIG. 12 is a view illustrating an example of detection of light source color information according to a second embodiment of the present disclosure.

FIG. 13 is a view illustrating a configuration example of an imaging device to which a technology according to the present disclosure can be applied.

FIG. 14 is a view illustrating a configuration example of an imaging element according to an embodiment of the present disclosure.

FIG. 15 is a view illustrating a configuration example of a pixel according to an embodiment of the present disclosure.

Description of Embodiments

In the following, embodiments of the present disclosure will be described in detail on the basis of the drawings. Note that the description will be made in the following order. Note that in each of the following embodiments, overlapped description is omitted by assignment of the same reference sign to the same parts.

1. First embodiment

2. Second embodiment

3. Configuration of an imaging device

4. Configuration of an imaging element

(1. First embodiment)

[Configuration of an image processing device]

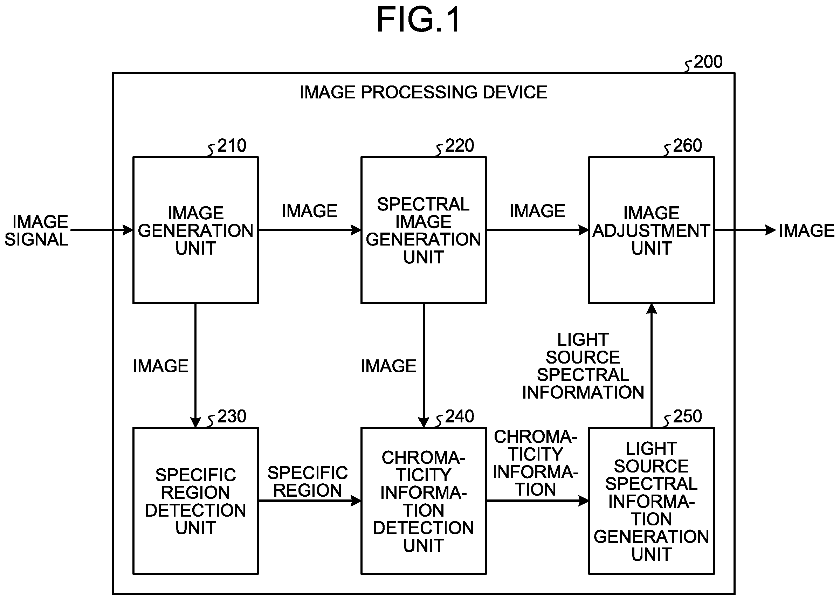

FIG. 1 is a view illustrating a configuration example of an image processing device according to an embodiment of the present disclosure. The drawing is a block diagram illustrating a configuration example of an image processing device 200. The image processing device 200 is a device that generates an image from an image signal output from an imaging element or the like and performs an output thereof. In addition, the image processing device 200 further performs processing of removing an influence of a light source from the generated image. The image processing device 200 in the drawing includes an image generation unit 210, a spectral image generation unit 220, a specific region detection unit 230, a chromaticity information detection unit 240, a light source spectral information generation unit 250, and an image adjustment unit 260.

The image generation unit 210 generates an image from an input image signal. The image generation unit 210 generates an image of one screen from an image signal generated by an imaging element or the like, and performs an output thereof as image data. As described later, the imaging element includes a pixel array unit (pixel array unit 10) including a plurality of pixels (pixels 100), and generates an image signal for each of the pixels at the time of imaging. Then, the imaging element sequentially outputs the generated plurality of image signals, for example, in order of arrangement of the pixels. The image generation unit 210 generates an image from the sequentially output image signals for one screen. This image is referred to as a RAW image. The image generation unit 210 outputs the generated image to the spectral image generation unit 220 and the specific region detection unit 230.

The spectral image generation unit 220 generates a spectral image from the RAW image. The spectral image can be generated by performance of reconstruction processing on the input image. This reconstruction processing is processing of generating each wavelength image from the input image signals. Each of the pixels of the imaging element described above output an image signal corresponding to light in a specific wavelength band among pieces of light from a subject. A spectral image for each wavelength can be generated from the image signal corresponding to each wavelength band. Note that the pixels of the imaging element used in the present disclosure generate spectral images, for example, from image signals corresponding to light of eight wavelength bands as described later. The spectral image generation unit 220 outputs the image on which the reconstruction processing is performed to the image adjustment unit 260 and the chromaticity information detection unit 240.

The specific region detection unit 230 detects a specific region from the image output from the image generation unit 210. Here, the specific region is a region where a specific object is imaged. For example, a plant such as a vegetable can be applied to the specific object. The specific region detection unit 230 detects a specific object from the image and detects a region of the specific object as a specific region. Details of the detection of the specific region in the specific region detection unit 230 will be described later. The specific region detection unit 230 outputs the detected specific region to the chromaticity information detection unit 240. Note that the specific region is not limited to the region of the plant. For example, a region of (an object of) reflected light of the same color can be applied to the specific region.

The chromaticity information detection unit 240 detects light source color information on the basis of the image signals of the specific region. Here, the light source color information is information of specifying a light source in a chromaticity space. The light source color information can be estimated by utilization of a shape of a distribution of when the plurality of image signals of the specific region is arranged in the chromaticity space such as an xy chromaticity diagram. In addition, the light source color information can also be estimated by utilization of an approximate straight line generated on the basis of the plurality of image signals on the xy chromaticity diagram. Furthermore, as the light source color information, a color temperature detected on the basis of this approximate straight line can also be used. Details of the detection of the light source color information in the chromaticity information detection unit 240 will be described later. The chromaticity information detection unit 240 generates chromaticity information by using the specific region output from the specific region detection unit 230 and the image output from the spectral image generation unit 220. That is, the chromaticity information detection unit 240 detects the light source color information by using the image signals of the region corresponding to the specific region in the image output from the spectral image generation unit 220. The chromaticity information detection unit 240 outputs the detected light source color information to the light source spectral information generation unit 250.

The light source spectral information generation unit 250 generates the light source spectral information on the basis of the light source color information output by the chromaticity information detection unit 240. The light source spectral information is information of a spectrum of the light source, and a spectral distribution of the light source can be applied, for example. The spectral distribution of the light source can be expressed by, for example, a ratio for each wavelength band of light from the light source. With respect to an existing light source, it is possible to measure the spectral distribution and to generate the light source spectral information. The light source spectral information generation unit 250 can be configured to hold pieces of light source spectral information of a plurality of the existing light sources. Then, the light source spectral information generation unit 250 can generate the light source spectral information based on the light source color information by using the plurality of pieces of light source spectral information. For example, the light source spectral information generation unit 250 can generate the light source spectral information by selecting one from the plurality of pieces of light source spectral information on the basis of the light source color information. Furthermore, for example, the light source spectral information generation unit 250 can also select two pieces of the light source spectral information on the basis of the light source color information. In this case, the light source spectral information generation unit 250 can also generate the light source spectral information by mixing the spectrums of the two pieces of light source spectral information for each wavelength. Details of the light source spectral information will be described later.

The image adjustment unit 260 adjusts the image, which is output by the spectral image generation unit 220, on the basis of the light source spectral information output by the light source spectral information generation unit 250. By this adjustment, the influence of the light source in the image can be removed. The image adjustment unit 260 can adjust the image signals included in the image for each wavelength band. For example, the image adjustment unit 260 can perform the adjustment by dividing the image signal of each wavelength band by a spectrum of the same wavelength band. As a result, it is possible to adjust a level of the image signals included in the image according to the spectrum of the light source, and to remove the influence of the light source. Details of the adjustment of the image by the image adjustment unit 260 will be described later. The image adjustment unit 260 outputs the adjusted image. The output image corresponds to the output image of the image processing device 200.

[Specular reflection component and diffuse reflection component]

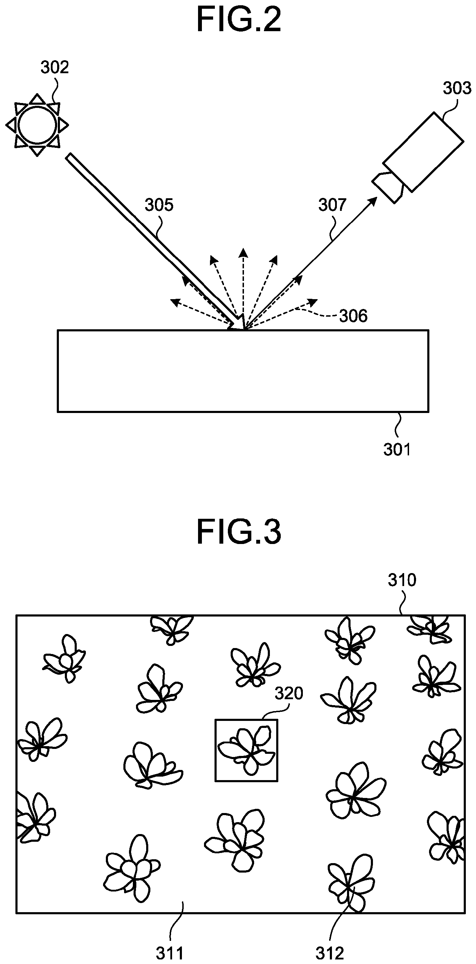

FIG. 2 is a view for describing a specular reflection component and a diffuse reflection component. This drawing is a view illustrating an example of a case where light 305 from a light source 302 is emitted to an object 301. When the light 305 is emitted to the object 301, reflected light is generated. This reflected light includes a specular reflection component 307 and a diffuse reflection component 306. The specular reflection component 307 is a component acquired by reflection of the light 305 from the light source 302 at an interface between the object 301 and a medium of the light 305, and is a component acquired by reflection of the light 305 from the light source 302 without a change in hue. On the other hand, the diffuse reflection component 306 is a component acquired by reflection of the light 305 from the light source 302 on an inner side of the object 301, and is a component in which the light 305 from the light source 302 is changed from the original hue of the object 301.

A case where such reflected light is observed by a camera 303 is assumed. This observation value can be expressed by a dichroic reflection model of the following expression.

$$I = I_{specular} + I_{diffuse} = \alpha \times L + \beta \times L \times \rho \qquad (1)$$

Here, I represents an observation value expressed by a vector. $I_{specular}$ represents a specular reflection component expressed by a vector. $I_{diffuse}$ represents a diffuse reflection component expressed by a vector. $\alpha$ and $\beta$ represent coefficients of the respective components. L represents a light source vector. $\rho$ represents a diffuse reflection vector. Each of $\alpha$ and $\beta$ changes depending on a geometric relationship such as a position of the light source 302, a direction of a surface of the object 301, and an observing direction.

When the observation value I is changed to the chromaticity space (x, y), the expression (1) can be expressed as the following expression.

$$I(x, y) = \alpha \times L(x, y) + \beta \times D(x, y) \qquad (2)$$

Here, L (x, y) represents chromaticity of the light source (specular reflection component). D (x, y) represents chromaticity of the diffuse reflection component. As expressed in the expression (2), the observation value I (x, y) is acquired by mixture of colors of L (x, y) and D (x, y) on the basis of coefficients of $\alpha$ and $\beta$. The color mixture in this chromaticity space is located on a straight line connecting the chromaticity on the chromaticity diagram. Thus, the observation value I (x, y) in the region are also distributed along the straight line.

In the present disclosure, the light source (specular reflection component) is detected from the image signals of the specific region detected by the specific region detection unit 230.

[Detection of a specific region]

FIG. 3 is a view illustrating an example of the specific region in the present disclosure. The drawing is a view illustrating an example of the specific region detected by the specific region detection unit 230. The specific region will be described with a case where a plant is applied to a specific object being an example. An image 310 in the drawing is an image of soil 311 in which a plant 312 is planted. A region including the plant 312 in the image 310 is the specific region. A region 320 in the drawing corresponds to the specific region. The specific region detection unit 230 detects and outputs the region 320 as the specific region.

The specific region can be detected on the basis of a spectral characteristic of reflected light of the specific object. The object has a unique spectral characteristic. This unique spectral characteristic is detected as a feature amount. For example, the plant 312 absorbs a large amount of visible light for photosynthesis. On the other hand, the plant 312 absorbs less infrared light. Thus, reflected light of the plant 312 has a spectral characteristic characterized by red light (around a wavelength of 600 nm) and near-infrared light (around a wavelength of 750 nm). Thus, imaging is performed by utilization of an imaging element having spectral sensitivity in these wavelength bands, the feature amount is detected, and the specific region is detected.

**EP 4 287 108 A1**

[Spectral sensitivity characteristics of an imaging element]

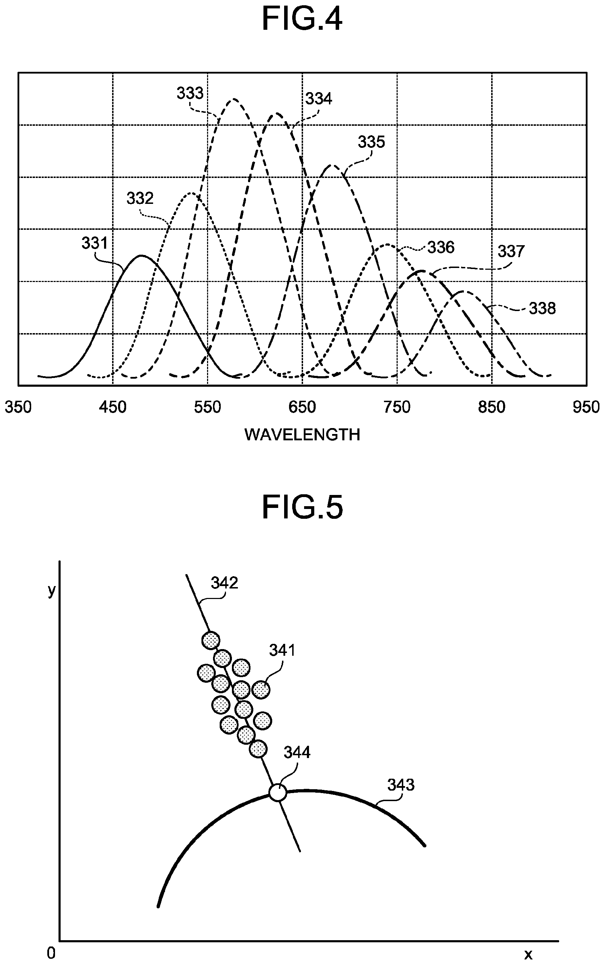

FIG. 4 is a view illustrating an example of spectral sensitivity characteristics of the imaging element used to detect the specific region in the present disclosure. The drawing is a view illustrating spectral sensitivity characteristics of the imaging element having spectral sensitivity in different wavelength bands. Furthermore, the drawing is a view illustrating an example of the imaging element capable of dispersing light in eight different wavelength bands, for example. For example, the imaging element to be used is configured by an arrangement of pixels respectively corresponding to the eight wavelength bands, and generates image signals respectively corresponding to the wavelength bands. In the drawing, a horizontal axis represents a wavelength, and a vertical axis represents sensitivity. Graphs 331 to 338 in the drawing respectively represent spectral sensitivity characteristics of the pixels.

From the drawing, pixels having the spectral characteristics at wavelengths of 600 nm and 750 nm are pixels having spectral sensitivity characteristics of the graphs 334 and 336, respectively. When image signals of the pixels having the spectral characteristics at the wavelengths of 600 nm and 750 nm are respectively $I_{Rch}$ and $I_{IRch}$, the feature amount can be calculated by the following expression.

$$|I_{Rch} - I_{IRch}|/(I_{Rch} + I_{IRch}) \qquad (3)$$

The specific region can be detected by a comparison between the calculated feature amount and a threshold.

[Detection of light source color information]

FIG. 5 is a view illustrating an example of detection of light source color information according to the first embodiment of the present disclosure. The drawing is a view illustrating an example of detection of the light source color information in the chromaticity information detection unit 240. In addition, the drawing is a view illustrating a relationship between image signals and chromaticity information of the specific region in the xy chromaticity diagram. In the drawing, a horizontal axis and a vertical axis represent an x coordinate and a y coordinate, respectively. Furthermore, hatched circles in the drawing represent chromaticity generated from the image signals. As described above, the chromaticity generated from the image signals that are the observation values is distributed on the straight line extended in a specific direction. This straight line can express a distribution of the image signals. A straight line 342 in the drawing represents an approximate straight line generated on the basis of the distribution of the image signals. The approximate straight line can be generated by a regression analysis or a principal component analysis.

The chromaticity information detection unit 240 can detect the approximate straight line as the light source color information. On the basis of the approximate straight line, the chromaticity information detection unit 240 can generate the light source spectral information. For example, the chromaticity information detection unit 240 can generate the light source spectral information on the basis of a shape (slope and intercept) of the approximate straight line. Specifically, the chromaticity information detection unit 240 can output the light source spectral information selected from a held plurality of pieces of the light source spectral information on the basis of the shape of the approximate straight line.

In addition, the chromaticity information detection unit 240 can also detect a color temperature of the light source from the approximate straight line. This color temperature is a numerical value representing a color of light emitted by the light source. This color temperature can be detected on the basis of, for example, the straight line 342 and a blackbody locus in the drawing. This blackbody locus represents a change in color of blackbody radiation in the xy chromaticity diagram. Here, the blackbody is an ideal object that completely absorbs and emits energy of an electromagnetic wave incident from the outside regardless of the wavelength. The blackbody is an object in which a color that is a spectral distribution of the electromagnetic wave emitted with respect to the absolute temperature is uniquely determined. The blackbody locus represents a change in a color of the blackbody with respect to a change in a temperature of the blackbody. A curve 343 in the drawing represents the blackbody locus. An intersection point 344 between the curve 343 and the straight line 342 can be detected as the color temperature.

The chromaticity information detection unit 240 can detect the above-described color temperature as the light source color information. On the basis of the color temperature, the chromaticity information detection unit 240 can generate the light source spectral information. For example, the chromaticity information detection unit 240 can hold a plurality of pieces of the light source spectral information, perform selection on the basis of the color temperature, and output the light source spectral information of a result of the selection as the light source spectral information based on the chromaticity information.

[Light source spectral information]

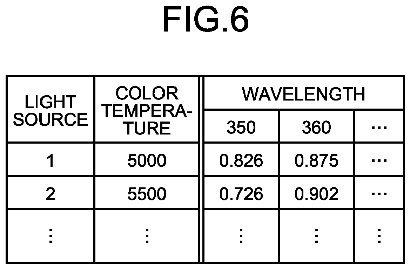

FIG. 6 is a view illustrating an example of the light source spectral information according to the first embodiment of the present disclosure. The drawing is a view illustrating an example of the pieces of light source spectral information held by the chromaticity information detection unit 240, and is a view illustrating an array of the pieces of light source spectral information. The "light source" in the drawing is a number of a light source for identifying the light source spectral information. The "color temperature" is the color temperature [K] of the light source. The light source spectral information is represented by a spectrum for each wavelength. The "wavelength" in the drawing represents a center wavelength [nm] of each spectrum. For this wavelength, for example, a wavelength in increments of 10 nm from 350 nm to 950 nm (61 wavelengths) can be applied. The pieces of light source spectral information in the drawing represent an example of holding information of the spectrum for each of the 61 wavelengths. The chromaticity information detection unit 240 can hold such an array of the pieces of light source spectral information corresponding to a plurality of the color temperatures. The pieces of light source spectral information in this array can be generated by measurement of the color temperatures and spectral information of existing light sources in advance. The chromaticity information detection unit 240 can use the array in the drawing as a lookup table to which the detected color temperatures are input and which outputs the pieces of light source spectral information.
For example, the chromaticity information detection unit 240 can select one light source having a color temperature closest to the detected color temperature from the array in the drawing. Next, the chromaticity information detection unit 240 can output the selected light source spectral information as the generated light source spectral information.
Furthermore, for example, the chromaticity information detection unit 240 can also generate the light source spectral information by selecting two pieces of the light source spectral information of the color temperature close to the detected color temperature and mixing the selected two pieces of light source spectral information. The mixture of the pieces of light source spectral information will be described on the assumption that two each of Ta and LUTa ($\lambda$), and Tb and LUTb ($\lambda$) are selected as the color temperatures and the pieces of light source spectral information. The mixture can be performed, for example, in a manner of the following expression.

$$Linterp(\lambda) = \frac{|T - T_b| \times LUT_a(\lambda) + |T - T_a| \times LUT_b(\lambda)}{|T_a - T_b|} \qquad \cdots (4)$$

Here, $L_{interp}$ ($\lambda$) represents the light source spectral information after the mixture. T represents the detected color temperature. $T_a$ and $T_b$ and $LUT_a$ ($\lambda$) and $LUT_b$ ($\lambda$) respectively represent the color temperatures and the pieces of light source spectral information of the selected light sources (a and b). In such a manner, the pieces of light source spectral information can be mixed on the basis of a ratio corresponding to a difference from the detected color temperature.
As described above, the chromaticity information detection unit 240 can generate the light source spectral information on the basis of the detected color temperature. The chromaticity information detection unit 240 outputs the generated light source spectral information to the image adjustment unit 260.

[Adjustment of an image]

The image adjustment unit 260 adjusts the image output from the spectral image generation unit 220 on the basis of the light source spectral information output from the chromaticity information detection unit 240. This adjustment can be performed, for example, in a manner of the following expression.

$$Iwb(x, y, \lambda) = \frac{I(x, y, \lambda)}{LUT(\lambda)} \times \frac{\Sigma_\lambda I(x, y, \lambda)}{\Sigma_\lambda \big( I(x, y, \lambda)/LUT(\lambda) \big)} \qquad \cdots (5)$$

Here, Iwb (x, y, $\lambda$) represents an image signal after the adjustment. I (x, y, $\lambda$) represents an input image signal. LUT ($\lambda$) represents light source spectral information. A calculation of I (x, y, $\lambda$)/LUT ($\lambda$) in the first half of the expression (5) is a portion corresponding to the adjustment of the image. A calculation of the latter half of the expression (5) is a calculation portion for compensating for a change in luminance due to the adjustment of the image.

[Removal of an influence of a light source]

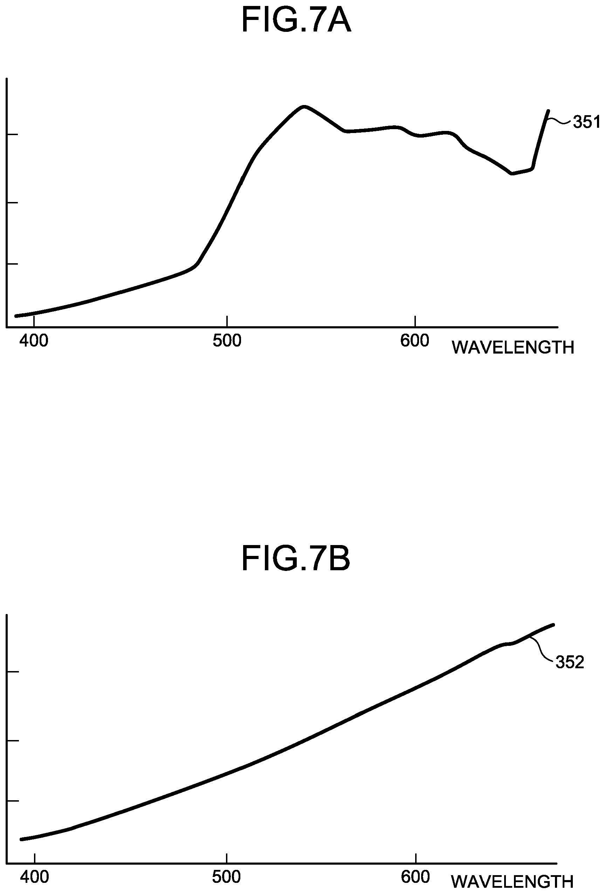

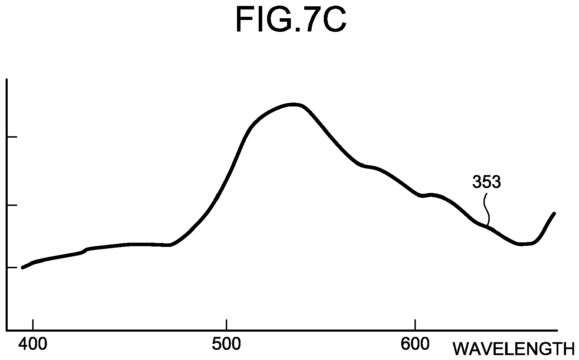

FIGS. 7A to 7C are views illustrating an example of a removal of an influence of a light source according to the first embodiment of the present disclosure. FIGS. 7A to 7C are views illustrating spectral distributions of images, and are views for describing an effect of the removal of the influence of the light source according to the present disclosure. A horizontal axis in FIGS. 7A to 7C represents a wavelength. A vertical axis represents luminance. Note that the vertical axis in FIGS. 7A to 7C represents brightness (arbitrary unit). A graph 351 in FIG. 7A represents a spectral distribution of the image output from the spectral image generation unit 220. A graph 352 in FIG. 7B represents a spectral distribution of the light source based on the light source spectral information output from the light source spectral information generation unit 250. A graph 353 in FIG. 7C represents an image adjusted by the image adjustment unit 260. By a removal of the spectral distribution of the light source in the graph 352 of FIG. 7B from the graph 351 of FIG. 7A, an image of the graph 353 of FIG. 7C can be generated. A graph 353 in FIG. 7C is a graph representing a spectral distribution corresponding to an original color of a subject.

[Image processing]

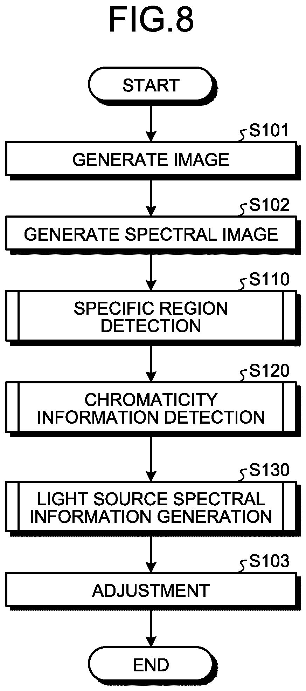

FIG. 8 is a view illustrating an example of image processing according to the first embodiment of the present disclosure. The drawing is a view illustrating an example of image processing in the image processing device 200. First, the image generation unit 210 generates an image from an input image signal (Step S101). Then, the spectral image generation unit 220 performs reconstruction processing and generates a spectral image (Step S102). Then, processing of specific region detection is performed (Step S110). This process is processing of detecting a specific region, and is processing performed by the specific region detection unit 230. Then, processing of chromaticity information detection is performed (Step S120). This processing is processing of detecting light source color information on the basis of the detected specific region, and is processing performed by the chromaticity information detection unit 240. Then, processing of light source spectral information generation is performed (Step S130). This processing is processing of generating light source spectral information on the basis of the detected light source color information, and is processing performed by the light source spectral information generation unit 250. Then, processing of adjustment is performed (Step S103). This processing is processing of adjusting a spectral image on the basis of the generated light source spectral information, and is processing performed by the image adjustment unit 260.

[Specific region detection processing]

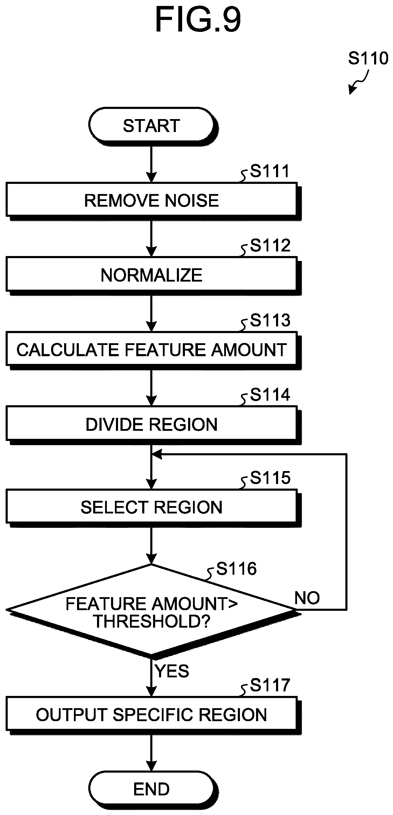

FIG. 9 is a view illustrating an example of specific region detection processing according to the first embodiment of the present disclosure. The drawing is a view illustrating an example of specific region detection processing in the specific region detection unit 230. First, the specific region detection unit 230 smooths an input image (Step Sill). By this processing, noise of the image can be removed. This smoothing can be performed by, for example, a Gaussian filter. Then, the specific region detection unit 230 normalizes the image (Step S112). Then, the specific region detection unit 230 calculates a feature amount (Step S113). This can be performed by utilization of the above-described expression (3). Then, the specific region detection unit 230 divides the image into a plurality of regions (Step S114). Then, the specific region detection unit 230 selects one unselected region among the divided regions (Step S115).

Then, the specific region detection unit 230 compares the feature amount of the selected region with a threshold (Step S116). In a case where the feature amount is not larger than the threshold (Step S116, No), the specific region detection unit 230 executes the processing from Step S115 again. On the other hand, in a case where the feature amount is larger than the threshold (Step S116, Yes), the specific region detection unit 230 transitions the processing to processing of Step S117.

In Step S117, the specific region detection unit 230 outputs the selected region as the specific region (Step S117). According to the above procedure, the specific region detection unit 230 can detect and output the specific region.

[Chromaticity information detection processing]

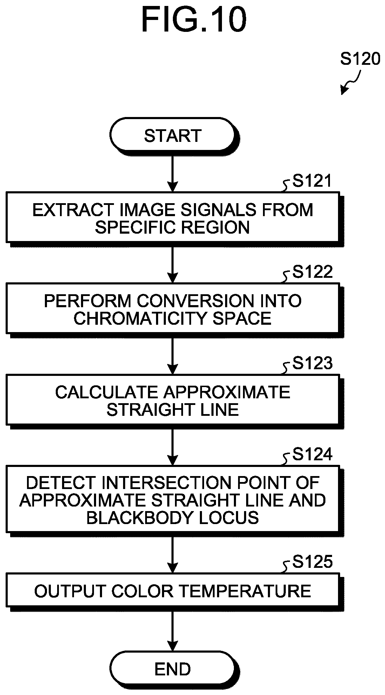

FIG. 10 is a view illustrating an example of chromaticity information detection processing according to the first embodiment of the present disclosure. The drawing is a view illustrating an example of chromaticity information detection processing in the chromaticity information detection unit 240. The chromaticity information detection processing will be described with a case where a color temperature is detected as light source color information being an example. First, the chromaticity information detection unit 240 extracts image signals from the specific region (Step S121). This can be performed by selection of the image signals included in a region corresponding to the specific region in the image (spectral image) output from the spectral image generation unit 220. At this time, the chromaticity information detection unit 240 extracts a predetermined number of image signals. Then, the chromaticity information detection unit 240 converts the plurality of extracted image signals into a chromaticity space (xy chromaticity) (Step S122).

Then, the chromaticity information detection unit 240 calculates an approximate straight line in the chromaticity space on the basis of the plurality of image signals (Step S123). Then, the chromaticity information detection unit 240 detects an intersection point of the approximate straight line and a blackbody locus (Step S124). Then, the chromaticity information detection unit 240 detects a color temperature or chromaticity on the basis of the detected intersection point and performs an output thereof (Step S125).

[Light source spectral information generation processing]

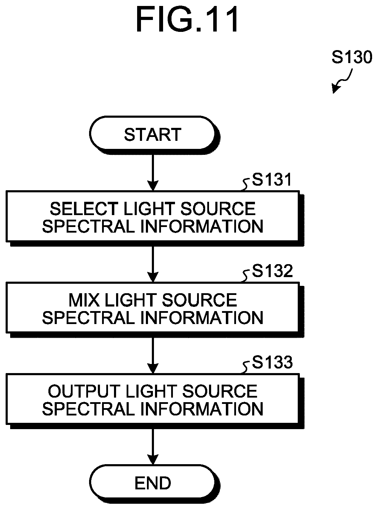

FIG. 11 is a view illustrating an example of light source spectral information generation processing according to the first embodiment of the present disclosure. The drawing is a view illustrating an example of light source spectral information generation processing in the light source spectral information generation unit 250. First, on the basis of the light source color information, the light source spectral information generation unit 250 selects light source spectral information from an array of pieces of the light source spectral information (Step S131). As described above with reference to FIG. 10, the chromaticity information detection unit 240 outputs the color temperature or chromaticity as the light source color information. Thus, the light source spectral information generation unit 250 selects the light source spectral information on the basis of the color temperature or the chromaticity. For example, the light source spectral information generation unit 250 can search the array of the pieces of light source spectral information on the basis of the color temperature input as the light source color information, and select two pieces of adjacent light source spectral information with the color temperature input as the light source color information being interposed therebetween.

Then, the light source spectral information generation unit 250 mixes the pieces of selected light source spectral information (Step S132). This can be performed by the expression (4). Then, the light source spectral information generation unit 250 outputs the light source spectral information generated by the mixture (Step S133).

As described above, the image processing device 200 of the first embodiment of the present disclosure generates the light source spectral information on the basis of the light source color information detected from the specific region from the array of the pieces of light source spectral information prepared in advance. As a result, it is possible to simplify the generation of the light source spectral information for removing the influence of the light source in the image.

(2. Second embodiment)

In the image processing device 200 of the first embodiment described above, the chromaticity information detection unit 240 detects the color temperature from the intersection point of the approximate straight line generated on the basis of the distribution of the image signals in the chromaticity space and the blackbody locus. On the other hand, an image processing device 200 of the second embodiment of the present disclosure is different from the above-described first embodiment in a point that a color temperature is detected without utilization of a blackbody locus.

[Detection of light source color information]

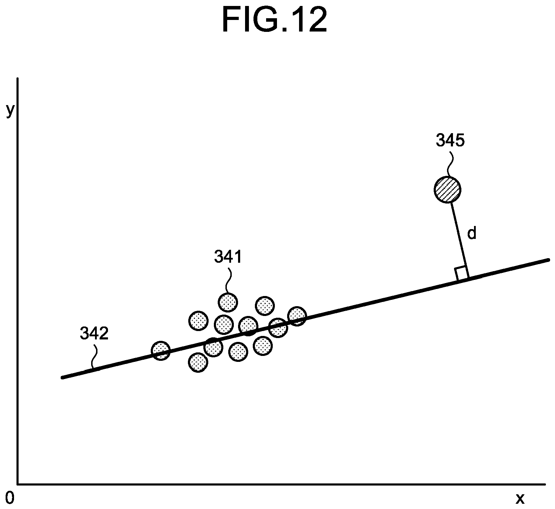

FIG. 12 is a view illustrating an example of detection of light source color information according to the second embodiment of the present disclosure. Similarly to FIG. 5, the drawing is a view illustrating an example of detection of light source color information in a chromaticity information detection unit 240. A method of detecting the light source color information in the drawing is different from the method of detecting the light source color information in FIG. 5 in a point that a curve of the blackbody locus is not used.

Similarly to FIG. 5, also in the drawing, a straight line 342 is generated on the basis of a distribution of image signals 341. In a method of detecting chromaticity information in the drawing, a light source having a color temperature closest to the straight line 342 in an xy chromaticity diagram is detected. That is, a color temperature having the shortest straight line distance d from the straight line 342 is output as the detected color temperature (chromaticity information).

Since the configuration of the image processing device 200 other than this is similar to the configuration of the image processing device 200 in the first embodiment of the present disclosure, description thereof will be omitted.

As described above, the image processing device 200 of the second embodiment of the present disclosure can detect the light source color information without using the blackbody locus.

(3. Configuration of an imaging device)

A technology according to the present disclosure can be applied to various products. For example, the technology according to the present disclosure can be applied to an imaging device such as a camera.

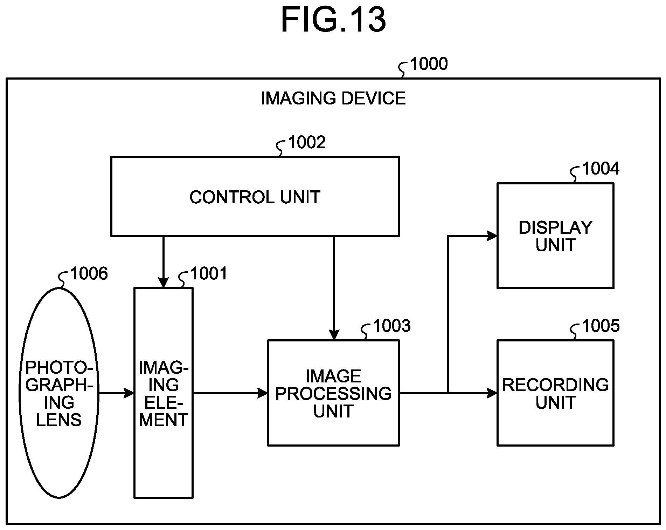

FIG. 13 is a view illustrating a configuration example of the imaging device to which the technology according to the present disclosure can be applied. An imaging device 1000 in the drawing includes an imaging element 1001, a control unit 1002, an image processing unit 1003, a display unit 1004, a recording unit 1005, and a photographing lens 1006.

The photographing lens 1006 is a lens that collects light from a subject. The subject is imaged on a light receiving surface of the imaging element 1001 by the photographing lens 1006.

The imaging element 1001 is an element that images the subject. A plurality of pixels including photoelectric conversion units that perform photoelectric conversion of the light from the subject is arranged on the light receiving surface of the imaging element 1001. Each of the plurality of pixels generates an image signal based on a charge generated by the photoelectric conversion. The imaging element 1001 converts the image signals generated by the pixels into digital image signals and performs an output thereof to the image processing unit 1003. Note that the image signals for one screen is referred to as a frame. The imaging element 1001 can also output the image signals in units of frames.

The control unit 1002 controls the imaging element 1001 and the image processing unit 1003. The control unit 1002 can include, for example, an electronic circuit using a microcomputer or the like.

The image processing unit 1003 processes the image signals from the imaging element 1001. The image processing unit 1003 can include, for example, an electronic circuit using a microcomputer or the like.

The display unit 1004 displays an image on the basis of the image signals processed by the image processing unit 1003. The display unit 1004 can include, for example, a liquid crystal monitor.

The recording unit 1005 records the image (frame) based on the image signals processed by the image processing unit 1003. The recording unit 1005 can include, for example, a hard disk or a semiconductor memory.

The imaging device to which the present disclosure can be applied has been described above. The present technology can be applied to the image processing unit 1003 among the above-described components. Specifically, the image processing device 200 described in FIG. 1 can be applied to the image processing unit 1003.

(4. Configuration of an imaging element)

[Configuration of the imaging element]

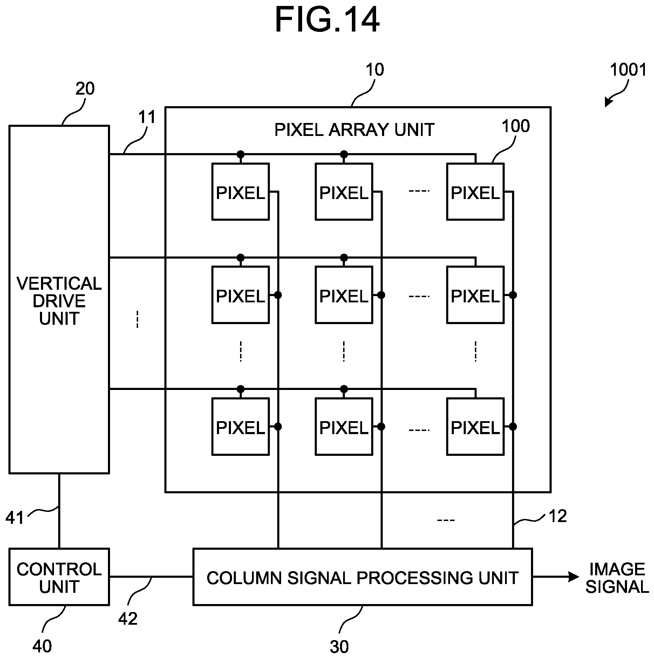

FIG. 14 is a view illustrating a configuration example of the imaging element according to the embodiment of the present disclosure. The drawing is a block diagram illustrating a configuration example of the imaging element 1001. The imaging element 1001 is a semiconductor element that generates image data of the subject. The imaging element 1001 includes a pixel array unit 10, a vertical drive unit 20, a column signal processing unit 30, and a control unit 40.

The pixel array unit 10 is configured by an arrangement of the plurality of pixels 100. The pixel array unit 10 in the drawing represents an example in which the plurality of pixels 100 is arrayed in a shape of a two-dimensional matrix. Here, each of the pixels 100 includes a photoelectric conversion unit that performs photoelectric conversion of incident light, and generates an image signal of the subject on the basis of the emitted incident light. For example, a photodiode can be used as the photoelectric conversion unit. Signal lines 11 and 12 are wired to each of the pixels 100. Each of the pixels 100 generates the image signal by being controlled by a control signal transmitted by the signal line 11, and outputs the generated image signal via the signal line 12. Note that the signal line 11 is arranged for each row of the shape of the two-dimensional matrix, and is commonly wired to the plurality of pixels 100 arranged in one row. The signal line 12 is arranged for each column of the shape of the two-dimensional matrix, and is commonly wired to the plurality of pixels 100 arranged in one column.

The vertical drive unit 20 generates the control signal of the pixels 100 described above. The vertical drive unit 20 in the drawing generates the control signal for each row of the two-dimensional matrix of the pixel array unit 10 and serially performs an output thereof via the signal line 11.

The column signal processing unit 30 processes the image signals generated by the pixels 100. The column signal processing unit 30 in the drawing simultaneously performs processing of the image signals from the plurality of pixels 100 arranged in one row of the pixel array unit 10, the image signals being transmitted via the signal line 12. As this processing, for example, analog-digital conversion of converting analog image signals generated by the pixels 100 into digital image signals, and correlated double sampling (CDS) of removing offset errors of the image signals can be performed. The processed image signals are output to a circuit or the like outside the imaging element 1001.

The control unit 40 controls the vertical drive unit 20 and the column signal processing unit 30. The control unit 40 in the drawing respectively outputs control signals via the signal lines 41 and 42, and controls the vertical drive unit 20 and the column signal processing unit 30.

[Configuration of a pixel]

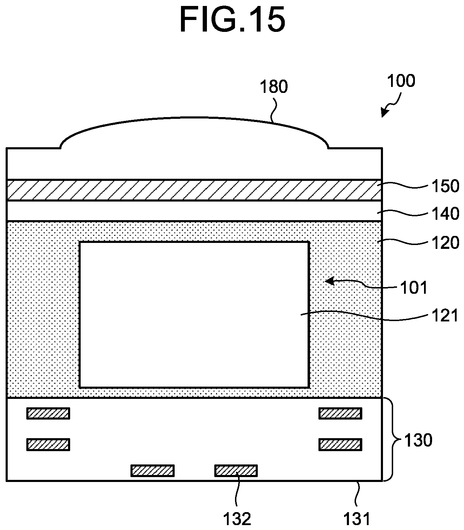

FIG. 15 is a view illustrating a configuration example of a pixel according to an embodiment of the present disclosure. The drawing is a view illustrating a configuration of a cross section of a pixel 100 in a simplified manner, and is a view schematically illustrating a part of the pixel 100. The pixel 100 includes a semiconductor substrate 120, a wiring region 130, a protective film 140, a color filter 150, and an on-chip lens 180.

The semiconductor substrate 120 is a semiconductor substrate on which elements of the pixel 100 are formed.

This semiconductor substrate 120 can include silicon (Si). In the drawing, a photoelectric conversion unit 101 among the elements included in the pixel 100 is illustrated. For convenience, the semiconductor substrate 120 in the drawing is assumed to be included in a p-type well region. A white rectangle illustrated in the semiconductor substrate 120 represents an n-type semiconductor region. In the drawing, an n-type semiconductor region 121 is illustrated.

The photoelectric conversion unit 101 includes the n-type semiconductor region 121. Specifically, a photodiode including a p-n junction at an interface between the n-type semiconductor region 121 and the surrounding p-type well region corresponds to the photoelectric conversion unit 101. During an exposure period, electrons of charges generated by photoelectric conversion by the photoelectric conversion unit 101 are accumulated in the n-type semiconductor region 121. An image signal is generated and output on the basis of the charges accumulated in the n-type semiconductor region 121 after the lapse of the exposure period.

The wiring region 130 is a region in which a wiring line that transmits a signal to the elements is arranged. The wiring region 130 includes a wiring line 132 and an insulating layer 131. The wiring line 132 transmits a signal of the elements. The wiring line 132 can include metal such as copper (Cu) or tungsten (W). An insulating layer 149 insulates the wiring line 132 and the like. This insulating layer 149 can include an insulator such as a silicon oxide ($SiO_2$).

The protective film 140 is a film that protects a back surface of the semiconductor substrate 120. The protective film 140 can include, for example, $SiO_2$.

The color filter 150 is an optical filter that transmits light of a predetermined wavelength among pieces of incident light.

The on-chip lens 180 is a lens that collects the incident light on the photoelectric conversion unit 101. The on-chip lens 180 in the drawing represents an example of being configured in a hemispherical shape. The on-chip lens 180 can include an inorganic material such as a silicon nitride (SiN) or an organic material such as an acrylic resin.

(Effect)

The image processing device 200 includes the specific region detection unit 230, the chromaticity information detection unit 240, and the light source spectral information generation unit 250. The specific region detection unit 230 detects a specific region that is a region of an image of a specific object from an image of a subject to which light from a light source is emitted. The chromaticity information detection unit 240 detects light source color information on the basis of a plurality of image signals of the detected specific region. The light source spectral information generation unit 250 generates light source spectral information, which is information of a spectrum of the light source, on the basis of the detected light source color information. Thus, the spectrum of the light source can be detected by the light source color information estimated from the specific region.

In addition, the light source spectral information may be information indicating a relationship between a wavelength and a spectrum. Thus, it is possible to detect the spectrum of each wavelength of the light source.

Furthermore, the light source spectral information generation unit 250 may generate the light source spectral information by mixing, for each wavelength, spectrums in a plurality of pieces of the light source spectral information based on the detected light source color information. This can simplify the generation of the light source spectral information.

Furthermore, the light source spectral information generation unit 250 may generate the light source spectral information by selection from a plurality of pieces of held light source spectral information. This can simplify the generation of the light source spectral information.

Furthermore, the chromaticity information detection unit 240 may detect, as the light source color information, an approximate straight line generated on the basis of a plurality of image signals in a chromaticity space. As a result, the detection of the light source color information can be simplified.

Furthermore, the chromaticity information detection unit 240 may detect a color temperature detected on the basis of the approximate straight line as the light source color information. As a result, the detection of the light source color information can be simplified.

Furthermore, the chromaticity information detection unit 240 may detect, as the color temperature, a color in a chromaticity space at an intersection point of the approximate straight line and a blackbody locus. This can simplify the detection of the color temperature.

Furthermore, the specific region detection unit 230 may detect the specific region on the basis of a relationship between a wavelength and reflectance of the specific object.

In addition, the specific region detection unit 230 may detect the specific region with a plant as the specific object.

In addition, an image adjustment unit that adjusts the image of the subject on the basis of the generated light source spectral information may be further included. As a result, an influence of the detected light source can be removed.

An image processing method is an image processing method including: detecting a specific region that is a region of an image of a specific object from an image of a subject to which light from a light source is emitted; detecting light source color information on the basis of a plurality of image signals of the detected specific region; and generating light source spectral information, which is information of a spectrum of the light source, on the basis of the detected light source color information. The spectrum of the light source can be detected by the light source color information estimated from the specific region.

An image processing program is an image processing program causing a computer to execute detecting a specific region that is a region of an image of a specific object from an image of a subject to which light from a light source is emitted, detecting light source color information on the basis of a plurality of image signals of the detected specific region, and generating light source spectral information, which is information of a spectrum of the light source, on the basis of the detected light source color information. The spectrum of the light source can be detected by the light source color information estimated from the specific region.

Note that the effects described in the present description are merely examples and are not limitations, and there may be another effect.

In addition, the processing procedure described in the above-described embodiment may be regarded as a method including the series of procedures, or may be regarded as a program for causing a computer to execute the series of procedures or a recording medium storing the program. As this recording medium, for example, a compact disc (CD), a minidisc (MD), a digital versatile disc (DVD), a memory card, a Blu-ray (registered trademark) disc, or the like can be used.

Note that the present technology can also have the following configurations.

(1) An image processing device comprising:

a specific region detection unit that detects a specific region that is a region of an image of a specific object from an image of a subject to which light from a light source is emitted;
a chromaticity information detection unit that detects light source color information on a basis of a plurality of image signals of the detected specific region; and
a light source spectral information generation unit that generates light source spectral information, which is information of a spectrum of the light source, on a basis of the detected light source color information.

(2) The image processing device according to the above (1), wherein the light source spectral information is information indicating a relationship between a wavelength and the spectrum.

(3) The image processing device according to the above (2), wherein the light source spectral information generation unit generates the light source spectral information by mixing, for each wavelength, spectrums in a plurality of pieces of the light source spectral information based on the detected light source color information.

(4) The image processing device according to the above (1) of (2), wherein the light source spectral information generation unit generates the light source spectral information by performing selection from a plurality of pieces of the held light source spectral information.

(5) The image processing device according to any one of the above (1) to (4), wherein the chromaticity information detection unit detects, as the light source color information, an approximate straight line generated on a basis of the plurality of image signals in a chromaticity space.

(6) The image processing device according to the above (5), wherein the chromaticity information detection unit detects, as the light source color information, a color temperature detected on a basis of the approximate straight line.

(7) The image processing device according to the above (6), wherein the chromaticity information detection unit detects, as the color temperature, a color in the chromaticity space at an intersection point of the approximate straight line and a blackbody locus.

(8) The image processing device according to any one of the above (1) to (7), wherein the specific region detection unit detects the specific region on a basis of a relationship between a wavelength and reflectance of the specific object.

(9) The image processing device according to the above (1), wherein the specific region detection unit detects the specific region with a plant as the specific object.

(10) The image processing device according to any one of the above (1) to (9), further comprising an image adjustment unit that adjusts the image of the subject on a basis of the generated light source spectral information.

(11) An image processing method comprising:

detecting a specific region that is a region of an image of a specific object from an image of a subject to which light from a light source is emitted;
detecting light source color information on a basis of a plurality of image signals of the detected specific region; and
generating light source spectral information, which is information of a spectrum of the light source, on a basis of the detected light source color information.

(12) An image processing program causing a computer to execute:

detecting a specific region that is a region of an image of a specific object from an image of a subject to which light from a light source is emitted;
detecting light source color information on a basis of a plurality of image signals of the detected specific region; and
generating light source spectral information, which is information of a spectrum of the light source, on a basis of the detected light source color information.

Reference Signs List

| 10 | PIXEL ARRAY UNIT |
| 100 | PIXEL |
| 200 | IMAGE PROCESSING DEVICE |
| 210 | IMAGE GENERATION UNIT |
| 220 | SPECTRAL IMAGE GENERATION UNIT |
| 230 | SPECIFIC REGION DETECTION UNIT |
| 240 | CHROMATICITY INFORMATION DETECTION UNIT |
| 250 | LIGHT SOURCE SPECTRAL INFORMATION GENERATION UNIT |
| 260 | IMAGE ADJUSTMENT UNIT |
| 1000 | IMAGING DEVICE |
| 1001 | IMAGING ELEMENT |
| 1003 | IMAGE PROCESSING UNIT |

**Claims**

1. An image processing device comprising:

a specific region detection unit that detects a specific region that is a region of an image of a specific object from an image of a subject to which light from a light source is emitted;
a chromaticity information detection unit that detects light source color information on a basis of a plurality of image signals of the detected specific region; and
a light source spectral information generation unit that generates light source spectral information, which is information of a spectrum of the light source, on a basis of the detected light source color information.

2. The image processing device according to claim 1, wherein the light source spectral information is information indicating a relationship between a wavelength and the spectrum.

3. The image processing device according to claim 2, wherein the light source spectral information generation unit generates the light source spectral information by mixing, for each wavelength, spectrums in a plurality of pieces of the light source spectral information based on the detected light source color information.

4. The image processing device according to claim 1, wherein the light source spectral information generation unit generates the light source spectral information by performing selection from a plurality of pieces of the held light source spectral information.

**5.** The image processing device according to claim 1, wherein the chromaticity information detection unit detects, as the light source color information, an approximate straight line generated on a basis of the plurality of image signals in a chromaticity space.

**6.** The image processing device according to claim 5, wherein the chromaticity information detection unit detects, as the light source color information, a color temperature detected on a basis of the approximate straight line.

**7.** The image processing device according to claim 6, wherein the chromaticity information detection unit detects, as the color temperature, a color in the chromaticity space at an intersection point of the approximate straight line and a blackbody locus.

**8.** The image processing device according to claim 1, wherein the specific region detection unit detects the specific region on a basis of a relationship between a wavelength and reflectance of the specific object.

**9.** The image processing device according to claim 1, wherein the specific region detection unit detects the specific region with a plant as the specific object.

**10.** The image processing device according to claim 1, further comprising an image adjustment unit that adjusts the image of the subject on a basis of the generated light source spectral information.

**11.** An image processing method comprising:

detecting a specific region that is a region of an image of a specific object from an image of a subject to which light from a light source is emitted;
detecting light source color information on a basis of a plurality of image signals of the detected specific region; and
generating light source spectral information, which is information of a spectrum of the light source, on a basis of the detected light source color information.

**12.** An image processing program causing a computer to execute:

detecting a specific region that is a region of an image of a specific object from an image of a subject to which light from a light source is emitted;
detecting light source color information on a basis of a plurality of image signals of the detected specific region; and
generating light source spectral information, which is information of a spectrum of the light source, on a basis of the detected light source color information.

# FIG.1

IMAGE PROCESSING DEVICE 200

IMAGE SIGNAL → IMAGE GENERATION UNIT 210

IMAGE → SPECTRAL IMAGE GENERATION UNIT 220

IMAGE → IMAGE ADJUSTMENT UNIT 260 → IMAGE

IMAGE → SPECIFIC REGION DETECTION UNIT 230

SPECIFIC REGION → CHROMA-TICITY INFORMATION DETECTION UNIT 240

CHROMA-TICITY INFORMATION → LIGHT SOURCE SPECTRAL INFORMATION GENERATION UNIT 250

IMAGE

LIGHT SOURCE SPECTRAL INFORMATION

EP 4 287 108 A1

# FIG.2

# FIG.3

# FIG.4

WAVELENGTH

# FIG.5

# FIG.6

| LIGHT SOURCE | COLOR TEMPERA-TURE | WAVELENGTH | | |
|---|---|---|---|---|
| | | 350 | 360 | ... |
| 1 | 5000 | 0.826 | 0.875 | ... |
| 2 | 5500 | 0.726 | 0.902 | ... |
| ⋮ | ⋮ | ⋮ | ⋮ | ⋮ |

# FIG.7A

# FIG.7B

# FIG.7C

# FIG.8

```
        ┌─────────────┐
        │    START    │
        └─────────────┘
               │
               ▼           ╭S101
        ┌──────────────────────┐
        │    GENERATE IMAGE     │
        └──────────────────────┘
               │
               ▼           ╭S102
        ┌──────────────────────┐
        │ GENERATE SPECTRAL IMAGE│
        └──────────────────────┘
               │
               ▼           ╭S110
        ┌──────────────────────┐
        │   SPECIFIC REGION     │
        │     DETECTION         │
        └──────────────────────┘
               │
               ▼           ╭S120
        ┌──────────────────────┐
        │    CHROMATICITY       │
        │ INFORMATION DETECTION │
        └──────────────────────┘
               │
               ▼           ╭S130
        ┌──────────────────────┐
        │ LIGHT SOURCE SPECTRAL │
        │ INFORMATION GENERATION│
        └──────────────────────┘
               │
               ▼           ╭S103
        ┌──────────────────────┐
        │      ADJUSTMENT       │
        └──────────────────────┘
               │
               ▼
        ┌─────────────┐
        │     END     │
        └─────────────┘
```

# FIG.9

S110

START

S111
REMOVE NOISE

S112
NORMALIZE

S113
CALCULATE FEATURE AMOUNT

S114
DIVIDE REGION

S115
SELECT REGION

S116
FEATURE AMOUNT> THRESHOLD?

NO

YES

S117
OUTPUT SPECIFIC REGION

END

# FIG.10

S120

START

S121
EXTRACT IMAGE SIGNALS FROM
SPECIFIC REGION

S122
PERFORM CONVERSION INTO
CHROMATICITY SPACE

S123
CALCULATE APPROXIMATE
STRAIGHT LINE

S124
DETECT INTERSECTION POINT OF
APPROXIMATE STRAIGHT LINE AND
BLACKBODY LOCUS

S125
OUTPUT COLOR TEMPERATURE

END

# FIG.11

S130

```
      ┌──────────────┐
      │    START     │
      └──────────────┘
             │
             ▼                      S131
┌──────────────────────────────┐
│   SELECT LIGHT SOURCE        │
│   SPECTRAL INFORMATION       │
└──────────────────────────────┘
             │
             ▼                      S132
┌──────────────────────────────┐
│   MIX LIGHT SOURCE           │
│   SPECTRAL INFORMATION       │
└──────────────────────────────┘
             │
             ▼                      S133
┌──────────────────────────────┐
│   OUTPUT LIGHT SOURCE        │
│   SPECTRAL INFORMATION       │
└──────────────────────────────┘
             │
             ▼
      ┌──────────────┐
      │     END      │
      └──────────────┘
```

# FIG.12

# FIG.13

IMAGING DEVICE — 1000

CONTROL UNIT — 1002

PHOTO-GRAPH-ING LENS — 1006

IMAG-ING ELE-MENT — 1001

IMAGE PROCESSING UNIT — 1003

DISPLAY UNIT — 1004

RECORDING UNIT — 1005

# FIG.14

# FIG.15

## INTERNATIONAL SEARCH REPORT

| International application No. |
| --- |
| **PCT/JP2022/001512** |

### A. CLASSIFICATION OF SUBJECT MATTER

*G06T 1/00*(2006.01)i; *H04N 9/04*(2006.01)i
FI:   H04N9/04 B; G06T1/00 510

According to International Patent Classification (IPC) or to both national classification and IPC

### B. FIELDS SEARCHED

Minimum documentation searched (classification system followed by classification symbols)

G06T1/00; H04N9/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2017-215851 A (CANON INC.) 07 December 2017 (2017-12-07) paragraphs [0031]-[0049], [0059]-[0074], fig. 1 | 1, 2, 5-12 |
| Y | | 3, 4 |
| Y | JP 2006-173799 A (CANON INC.) 29 June 2006 (2006-06-29) paragraph [0018], fig. 2 | 3 |
| Y | JP 2009-272709 A (CANON INC.) 19 November 2009 (2009-11-19) paragraph [0024] | 4 |
| A | JP 2008-236437 A (TOSHIBA CORP.) 02 October 2008 (2008-10-02) fig. 6 | 1-12 |
| A | JP 2016-4134 A (CANON INC.) 12 January 2016 (2016-01-12) entire text, all drawings | 1-12 |
| A | JP 2004-165932 A (SONY CORP.) 10 June 2004 (2004-06-10) fig. 10 | 1-12 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 March 2022** | **15 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/001512**

| Patent document cited in search report | | | Publication date (day/month/year) | Patent family member(s) | | | Publication date (day/month/year) |
|---|---|---|---|---|---|---|---|
| JP | 2017-215851 | A | 07 December 2017 | (Family: none) | | | |
| JP | 2006-173799 | A | 29 June 2006 | US paragraph [0067], fig. 9 | 2006/0139668 | A1 | |
| JP | 2009-272709 | A | 19 November 2009 | (Family: none) | | | |
| JP | 2008-236437 | A | 02 October 2008 | (Family: none) | | | |
| JP | 2016-4134 | A | 12 January 2016 | US entire text; all drawings | 2015/0365609 | A1 | |
| JP | 2004-165932 | A | 10 June 2004 | US fig.10 EP | 2006/0103728 1583371 | A1 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014203453 A